# DEMANDE DE BREVET EUROPEEN

(11) **EP 1 884 454 A1**
(43) Date de publication de la demande: **06.02.2008**
(21) Numéro de dépôt: 07301126.4
(22) Date de dépôt: 19.06.2007
(51) Int. Cl.: B62D 65/16, B60Q 1/04

(54) **Dispositif de montage d'un feu de signalisation et d'une peau de pare-chocs sur une structure arrière d'un véhicule et véhicule comportant au moins un tel dispositif.**

(30) Priorité: 01.08.2006 FR 0653234
(71) Demandeur: PEUGEOT CITROËN AUTOMOBILES S.A., 78140 Velizy Villacoublay (FR)
(72) Inventeur: Vuillemin, Roland, 25340, ABBENANS (FR)

(57) **Abrégé**

L'invention concerne un dispositif de montage d'un feu de signalisation (10) et d'une peau de pare-chocs (20) sur une structure arrière d'un véhicule, caractérisé en ce qu'il comprend des moyens de centrage du feu (10) par rapport à la peau (20) selon un axe vertical et un axe transversal perpendiculaire à l'axe longitudinal du véhicule, des moyens de centrage et d'accrochage de la peau (20) sur la structure selon l'axe longitudinal et un ensemble de verrouillage des moyens d'accrochage de la peau et d'accrochage du feu (10) sur les moyens d'accrochage de ladite peau (20).

## Description

La présente invention concerne un dispositif de montage d'un feu de signalisation et d'une peau de pare-chocs sur une structure arrière d'un véhicule automobile, ainsi qu'un véhicule automobile équipé d'au moins un tel dispositif de montage.

De manière classique, les véhicules automobiles comportent à l'arrière deux feux de signalisation le plus souvent disposés de part et d'autre d'un panneau de coffre ou d'un hayon et au-dessus d'une peau de pare-chocs.

Les feux de signalisation et la peau de pare-chocs sont montés sur la structure arrière du véhicule par des moyens de fixation appropriés.

Ces moyens de fixation comprennent notamment deux supports qui sont fixés par des organes de vissage ou de sertissage sur la structure du véhicule et dont le principal inconvénient réside dans la mauvaise qualité des affleurements entre la peau et chaque feu de signalisation et également entre ces pièces avec les éléments de carrosserie adjacents.

Ainsi, la qualité perçue de la partie arrière du véhicule est perceptible notamment lorsque le panneau de coffre ou le hayon est en position d'ouverture.

De plus, les organes de fixation utilisés jusqu'à présent nécessitent plusieurs pièces et un nombre d'opérations importants ce qui augmente le coût de fabrication du véhicule.

L'invention a pour but de proposer un dispositif de montage d'un feu de signalisation et d'une peau de pare-chocs sur une structure arrière d'un véhicule qui évite ces inconvénients en permettant un assemblage rapide et simple de ces éléments entre eux, tout en améliorant significativement le jeu et les affleurements et ainsi la qualité de fabrication perçue de la partie arrière du véhicule.

L'invention a donc pour objet un dispositif de montage d'un feu de signalisation et d'une peau de pare-chocs sur une structure arrière d'un véhicule automobile, caractérisé en ce qu'il comprend, entre autres :
- sur le feu de signalisation et sur la peau de pare-chocs des moyens de centrage l'un par rapport à l'autre selon un axe vertical et selon un axe transversal perpendiculaire à l'axe longitudinal du véhicule,
- sur la peau de pare-chocs, des moyens de centrage et d'accrochage de cette peau sur la structure selon l'axe longitudinal du véhicule, et
- sur le feu de signalisation, un ensemble de verrouillage des moyens d'accrochage de la peau et d'accrochage du feu sur les moyens d'accrochage de ladite peau de pare-chocs.

Selon d'autres caractéristiques de l'invention :
- les moyens de centrage et d'accrochage et l'ensemble de verrouillage et d'accrochage sont dissimulés par le feu de signalisation et la peau de pare-chocs,
- les moyens de centrage selon l'axe vertical de la peau de pare-chocs par rapport au feu de signalisation comprennent une rainure horizontale ménagée sur le bord supérieur de cette peau et une nervure horizontale ménagée sur le bord inférieur de ce feu et destinée à coopérer avec ladite rainure,
- les moyens de centrage selon l'axe transversal de la peau de pare-chocs par rapport au feu de signalisation comprennent une gorge verticale ménagée sur le bord supérieur de cette peau et une nervure horizontale ménagée sur le bord inférieur de ce feu et destinée à coopérer avec ladite gorge,
- les moyens d'accrochage de la peau sur la structure et l'ensemble d'accrochage du feu sur ces moyens d'accrochage sont des systèmes d'accrochage par encliquetage,
- les moyens de centrage et d'accrochage de la peau sur la structure comprennent au moins une patte élastique en forme de V comportant une première branche horizontale solidaire du bord supérieur de la peau de pare-chocs et une seconde branche inclinée et libre, munie sur sa face externe d'une rainure transversale,
- les moyens de centrage et d'accrochage comprennent également un support solidaire de la structure et muni d'une découpe d'emboîtement de la patte élastique, la rainure de la seconde branche étant destinée à coopérer avec un bord de ladite découpe, et
- l'ensemble de verrouillage et d'accrochage comprend, sur le bord intérieur du feu, une première patte horizontale destinée à être placée entre les deux branches de la patte élastique pour éviter le rapprochement de ces deux branches et une seconde patte horizontale munie à son extrémité libre, d'un rebord d'accrochage sur une portion latérale de la première branche de ladite patte élastique.

L'invention a également pour objet un véhicule automobile, caractérisé en ce qu'il comprend au moins un dispositif de montage d'un feu de signalisation et d'une peau de pare-chocs sur une structure arrière d'un véhicule, tel que précédemment mentionné.

L'invention sera mieux comprise à la lecture de la description qui va suivre, donnée à titre d'exemple et faite en référence aux dessins annexés, sur lesquels :
- la Fig. 1 est une vue schématique partielle et en perspective d'une partie arrière d'un véhicule automobile équipée d'un feu de signalisation arrière et d'une peau de pare-chocs,
- la Fig. 2 est une vue schématique partielle et en perspective de la face arrière d'un feu de signalisation équipée d'un dispositif de montage, conforme à l'invention,
- la Fig. 3 est une vue schématique partielle et en perspective de la face arrière d'une peau de pare-chocs équipée d'un dispositif de montage, conforme à l'invention,
- la Fig. 4 est une vue schématique en perspective d'une partie du dispositif de montage du feu de signalisation et de la peau de pare-chocs assemblés l'un à l'autre,
- la Fig. 5 est une vue en coupe verticale d'une partie du dispositif de montage du feu de signalisation et de la peau de pare-chocs assemblés l'un à l'autre,
- la Fig. 6 est une vue en coupe verticale selon la ligne 6-6 de la Fig. 4, et
- la Fig. 7 est une vue en coupe verticale selon la ligne 7-7 de la Fig. 4.

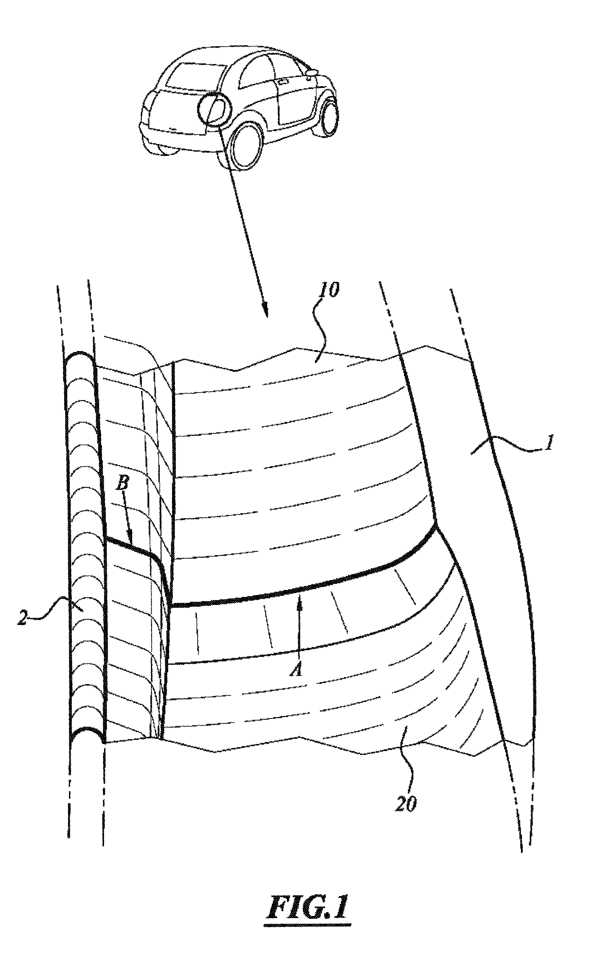

Sur la Fig. 1, on a représenté schématiquement une partie de l'arrière d'un véhicule automobile qui comporte, de manière classique, un feu de signalisation 10 et une peau de pare-chocs 20 disposés l'un au dessus de l'autre entre un côté 1 de la carrosserie du véhicule automobile et un joint 2 de l'entrée d'un compartiment de coffre muni d'un panneau de coffre ou d'un hayon, non représenté.

Le panneau de coffre ou le hayon est, sur cette figure, en position ouverte.

Le feu de signalisation 10 et la peau de pare-chocs 20 forment entre eux deux zones de liaison, respectivement A et B, qui sont importantes pour la détermination de la qualité perçue de l'arrière du véhicule pour les utilisateurs. Cette notion de qualité perçue est également valable pour les zones d'affleurement entre le feu de signalisation 10 et la peau de pare-chocs 20 et le côté 1 de la carrosserie du véhicule.

Le dispositif de montage selon l'invention disposé sur les faces cachées du feu de signalisation 10 et de la peau de pare-chocs 20 permet d'obtenir des zones d'affleurement A et B constantes et reproductibles d'un véhicule à l'autre.

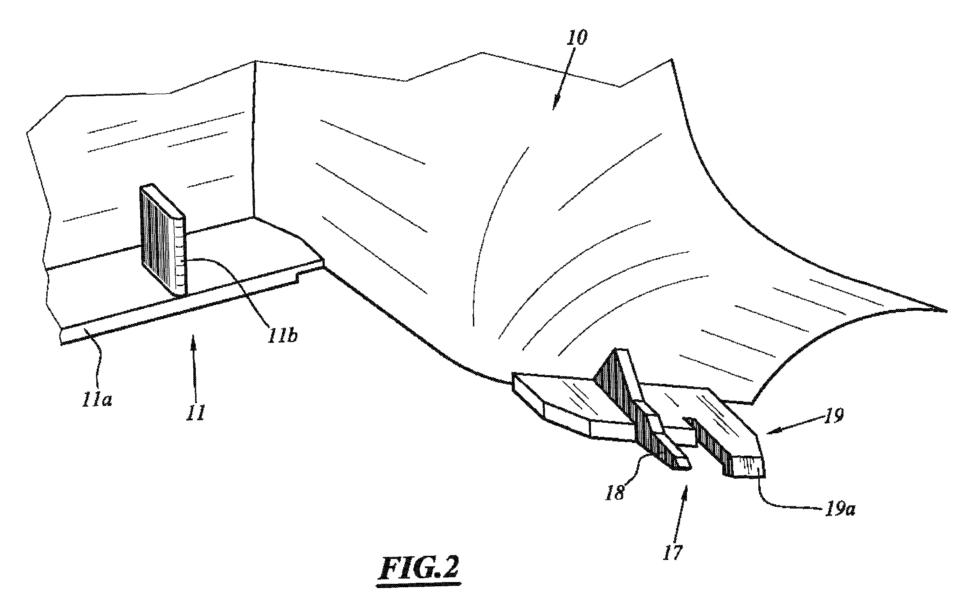

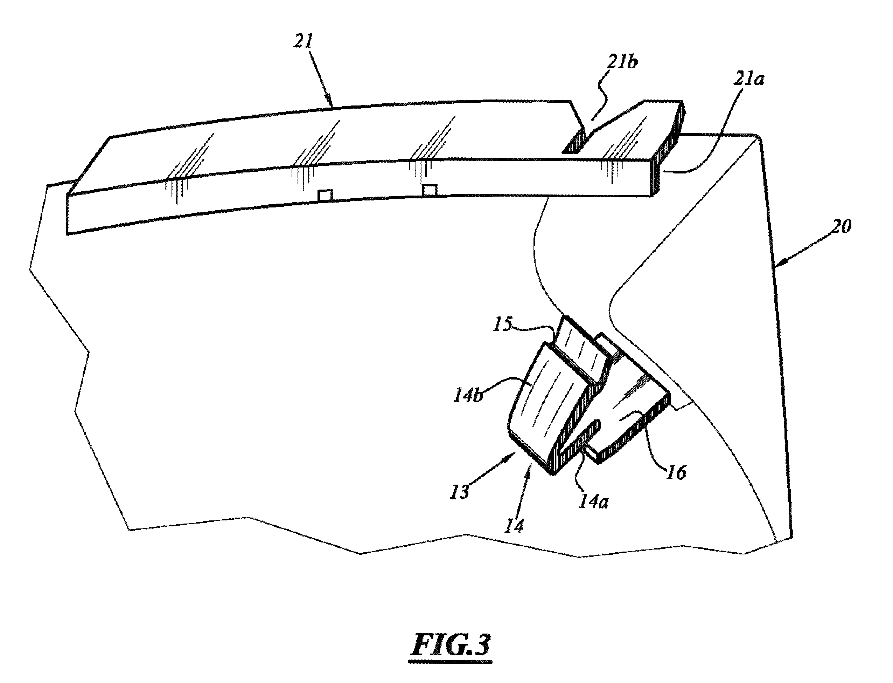

En se reportant maintenant aux Figs. 2 et 3, on va décrire le dispositif de montage du feu de signalisation 10 et de la peau de pare-chocs 20 l'un sur l'autre et également sur la structure du véhicule.

A cet effet, le dispositif de montage comprend sur le feu de signalisation 10 et la peau de pare-chocs 20, des moyens, respectivement 11 et 21, de centrage l'un par rapport à l'autre, selon un axe vertical et selon un axe transversal perpendiculaire à l'axe longitudinal du véhicule.

Ainsi que montré sur les Figs. 2 et 3 ces moyens 11 et 21 de centrage comprennent, sur la face cachée du feu de signalisation 10 et dans la zone de liaison A, une nervure horizontale 11 a ménagée sur le bord inférieur de ce feu 10 et une nervure verticale 11 b également ménagée sur le bord inférieur dudit feu 10. Ces moyens de centrage comprennent également une rainure horizontale 21 a ménagée sur le bord supérieur de la peau de pare-chocs 20 et une gorge verticale 21 b ménagée également sur le bord supérieur de ladite peau 20.

La nervure horizontale 11 a est destinée à coopérer avec la rainure horizontale 21 a pour assurer le centrage selon l'axe vertical, de la peau de pare-chocs 20 par rapport au feu de signalisation 10 et la gorge verticale 21 b est destinée à coopérer avec la nervure verticale 11 a pour assurer le centrage selon l'axe transversal, de la peau de pare-chocs 20 par rapport au feu de signalisation 10.

Le dispositif de montage comprend également, sur la peau de pare-chocs 20, des moyens 13 de centrage et d'accrochage (Fig. 3) de cette peau 20 sur la structure du véhicule, selon l'axe longitudinal de ce véhicule et, sur le feu de signalisation 10, un ensemble 15 (Fig. 2) des verrouillages des moyens 13 d'accrochage de la peau 20 et d'accrochage du feu 10 sur ces moyens 13 d'accrochage de ladite peau 20.

D'une manière générale, les moyens 13 d'accrochage de la peau 20 sur la structure et l'ensemble 17 d'accrochage du feu sur ces moyens 13 d'accrochage sont des systèmes d'accrochage par encliquetage.

Ainsi que montré à la Fig. 3, les moyens 13 de centrage et d'accrochage de la peau 20 sur la structure du véhicule comprennent au moins une patte 14 élastique en forme de V. Cette patte 14 comporte une première branche horizontale 14a solidaire du bord supérieur de la peau 20 et une seconde branche inclinée 14b libre et munie sur sa face externe d'une rainure transversale 15. La branche inclinée 14b de cette patte 14 peut donc se rapprocher de la branche horizontale 14a par élasticité.

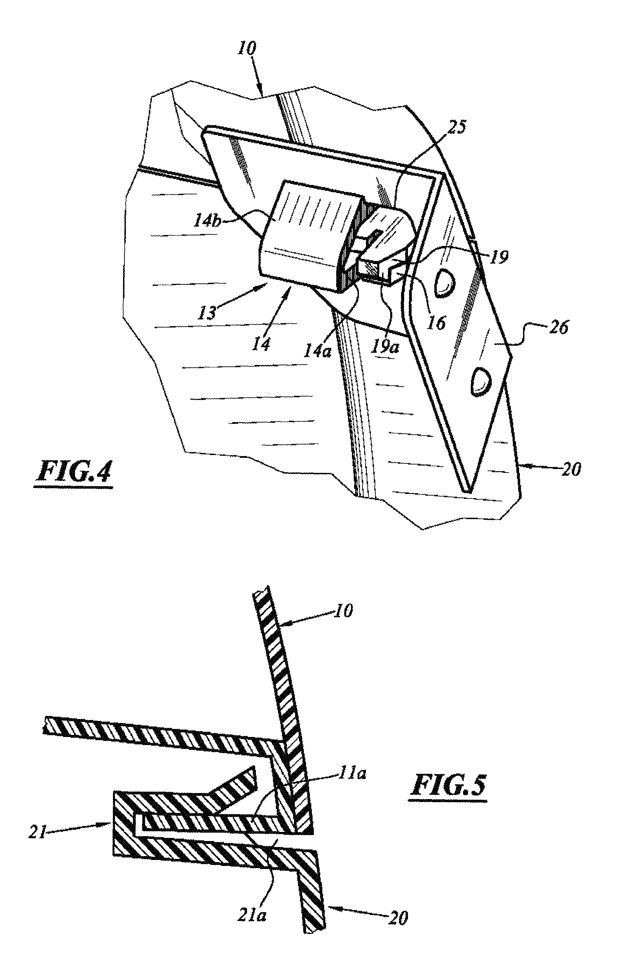

Comme montré à la Fig. 4, la patte élastique 13 est destinée à venir s'emboîter dans une découpe 25 ménagée dans un support 26 fixé sur la structure du véhicule et ayant par exemple la forme d'une équerre.

L'ensemble 17 de verrouillage et d'accrochage représenté à la Fig. 2 et disposé sur la face dissimulée du feu de signalisation 10, comprend sur le bord inférieur de ce feu 10, une première patte horizontale 18 destinée à être placée entre les deux branches 14a et 14b de la patte élastique 14 pour éviter le rapprochement de ces deux branches et ainsi verrouiller cette patte 17 dans la découpe 25 du support 26, comme on le verra ultérieurement.

L'ensemble 17 comprend aussi une seconde patte 19 horizontale munie, à son extrémité libre, d'un rebord 19a d'accrochage avec la première branche 14a de la patte 14.

A cet effet et comme montré à la Fig. 3, cette première branche 14a est pourvue d'une portion latérale 16 sur laquelle vient s'encliqueter le rebord d'accrochage 19a de la seconde patte 19 lors du montage du feu 10.

Le montage du feu de signalisation 10 et de la peau de pare-chocs 20 sur la structure du véhicule est réalisé de la façon suivante.

Tout d'abord, dans la zone B, la patte élastique 14 est engagée dans la découpe 25 du support 16 de telle manière que la rainure 15 vienne s'encliqueter sur le bord supérieur de cette découpe 25, ainsi que représenté à la Fig. 4.

Ensuite, le feu de signalisation 10 est placé au-dessus de la peau de pare-chocs 20 en disposant la nervure horizontale 11a dans la rainure horizontale 21 a (Fig. 5) et la nervure verticale 11 b dans la gorge verticale 21 b de la peau de pare-chocs 10.

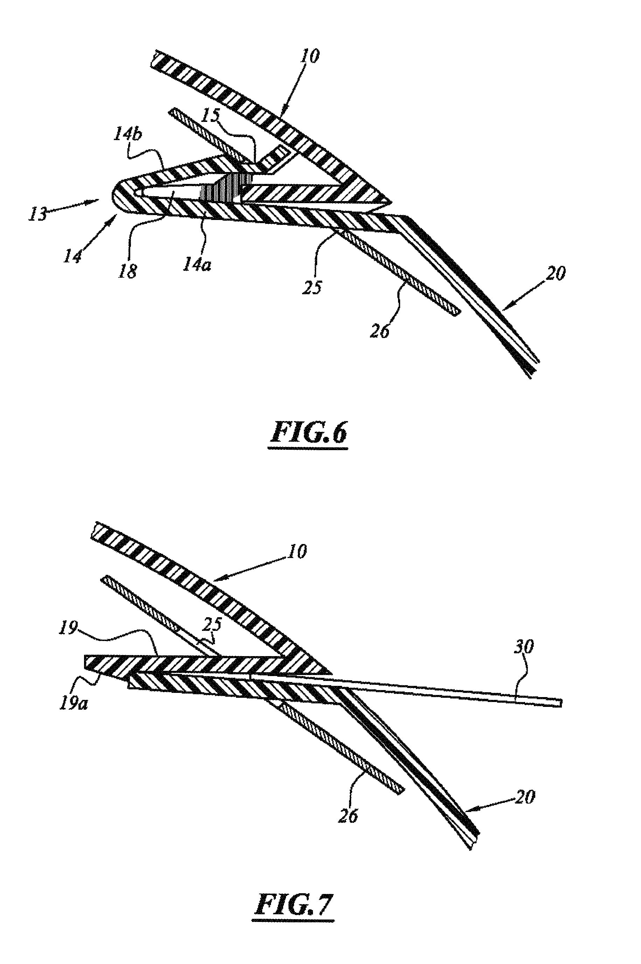

Simultanément, la première patte horizontale 18 de l'ensemble 17 est placée entre les deux branches 14a et 14b de la patte 14 (Figs. 4 et 6) ce qui bloque ces deux pattes 14a et 14b dans la découpe 25 et empêche le rapprochement de ces deux pattes.

La seconde patte horizontale 19 de l'ensemble 17 est positionnée au-dessus de la portion latérale 16 de la branche horizontale 14a afin que le rebord 19a vienne s'encliqueter sur cette portion latérale 16 (Fig. 7) assurant ainsi le verrouillage de l'ensemble 17 dans la patte 14 et le blocage de cette patte 14 dans la découpe 25 du support 26 solidaire de la structure du véhicule.

Par conséquent, le verrouillage et le centrage du feu de signalisation 10 et de la peau de pare-chocs 20 sont assurés selon les trois axes d'un repère orthonormé, c'est à dire selon l'axe longitudinal du véhicule, selon l'axe transversal perpendiculaire à cet axe longitudinal et selon l'axe vertical.

La nervure verticale 11 b assure donc dans la zone A le positionnement selon l'axe transversal perpendiculaire à l'axe longitudinal du véhicule et la nervure horizontale 11 a assure le jeu selon l'axe vertical dans cette zone A. De plus, cette nervure horizontale 11 a et la gorge verticale 21 b assurent dans la zone A l'aspect selon l'axe transversal et selon l'axe vertical.

Pour désolidariser le feu de signalisation 10 de la peau de pare-chocs 20, il suffit à un opérateur d'introduire un outil 30, comme représenté à la Fig. 7, entre la seconde patte horizontale 19 et la portion latérale 16 de la première branche 14a pour désengager le rebord 19a de cette portion latérale 16.

Le dispositif de montage selon l'invention permet de créer une liaison non visible de l'extérieur entre le feu de signalisation arrière et la peau de pare-chocs, tout en améliorant la qualité perçue dans les zones d'affleurement entre le feu de signalisation, la peau de pare-chocs et les éléments adjacents de la carrosserie du véhicule. L'esthétique générale du véhicule se trouve donc améliorée.

Ce dispositif de montage nécessite pour chaque feu de signalisation une pièce supplémentaire fixée sur la structure et les différents moyens de centrage et d'accrochage ménagés sur les faces cachées du feu de signalisation et de la peau de pare-chocs sont venus de matière avec ces deux éléments lors de leur moulage.

## Revendications

1. Dispositif de montage d'un feu de signalisation (10) et d'une peau de pare-chocs (20) sur une structure arrière d'un véhicule automobile, **caractérisé en ce qu'**il comprend, entre autres :
- sur le feu de signalisation (10) et la peau de pare-chocs (20), des moyens (11, 12) de centrage l'un par rapport à l'autre, selon un axe vertical et un axe transversal perpendiculaire à l'axe longitudinal du véhicule,
- sur la peau de pare-chocs (20), des moyens (13) de centrage et d'accrochage de cette peau (20) sur la structure selon l'axe longitudinal du véhicule, et
- sur le feu de signalisation (10), un ensemble (17) de verrouillage des moyens (13) d'accrochage de la peau (20) et d'accrochage du feu (10) sur les moyens (13) d'accrochage de ladite peau de pare-chocs (20).

2. Dispositif selon la revendication 1, **caractérisé en ce que** les moyens (13) de centrage et d'accrochage et l'ensemble (17) de verrouillage et d'accrochage sont dissimulés par le feu de signalisation (10) et la peau de pare-chocs (20).

3. Dispositif selon les revendications 1 ou 2, **caractérisé en ce que** les moyens (11, 21) de centrage selon l'axe vertical de la peau de pare-chocs (20) par rapport au feu de signalisation (10) comprennent une rainure horizontale (21 a) ménagée sur le bord supérieur de cette peau (20) et une nervure horizontale (11a) ménagée sur le bord inférieur de ce feu (10) et destinée à coopérer avec ladite rainure (21 a).

4. Dispositif selon les revendications 1 et 2, **caractérisé en ce que** les moyens (11, 21) de centrage selon l'axe transversal de la peau de pare-chocs (20) par rapport au feu de signalisation (10) comprennent une gorge verticale (21 b) ménagée sur le bord supérieur de cette peau (20) et une nervure horizontale (11 b) ménagée sur le bord inférieur de ce feu (10) et destinée à coopérer avec ladite gorge (21 b).

5. Dispositif selon les revendications 1 et 2, **caractérisé en ce que** les moyens (13) d'accrochage de la peau (20) sur la structure et l'ensemble (17) d'accrochage du feu (10) sur les moyens (13) d'accrochage sont des systèmes d'accrochage par encliquetage.

6. Dispositif selon l'une quelconque des revendications précédentes, **caractérisé en ce que** les moyens (13) de centrage et d'accrochage de la peau (10) sur la structure comprennent au moins une patte élastique (14) en forme de V comportant une première branche horizontale (14a) solidaire du bord supérieur de la peau de pare-chocs (20) et une seconde branche inclinée (14b) libre, munie sur sa face externe d'une rainure transversale (15).

7. Dispositif selon la revendication 6, **caractérisé en ce que** les moyens (13) de centrage et d'accrochage comprennent également un support (26) solidaire de la structure et muni d'une découpe (25) d'emboîtement de la patte élastique (14), la rainure (15) de la seconde branche (14b) étant destinée à coopérer avec un bord de ladite découpe (25).

8. Dispositif selon l'une quelconque des revendications précédentes, **caractérisé en ce que** l'ensemble (17) de verrouillage et d'accrochage comprend, sur le bord inférieur du feu (10), une première patte horizontale (18) destinée à être placée entre les deux branches (14a, 14b) de la patte élastique (14) pour éviter le rapprochement de ces deux branches et une seconde patte horizontale (19) munie à son extrémité libre d'un rebord d'accrochage (19a) avec la première branche (14a) de la patte élastique (14).

9. Véhicule automobile, **caractérisé en ce qu'**il comprend au moins un dispositif de montage d'un feu de signalisation (10) et d'une peau de pare-chocs (20) sur une structure arrière d'un véhicule, selon l'une quelconque des revendications précédentes.
